# EUROPEAN PATENT APPLICATION

(11) **EP 2 447 590 A2**
(43) Date of publication of application: **02.05.2012**
(21) Application number: 11187041.6
(22) Date of filing: 28.10.2011
(51) Int. Cl.: F16L 55/179

(54) **Lateral pipe lining method and lateral pipe lining apparatus**

(30) Priority: 02.11.2010 JP 2010246061
(71) Applicant: Shonan Gosei-Jushi Seisakusho K.K., Kanagawa 254-0807 (JP)
(72) Inventor: Kamiyama, Takao, Kanagawa-ken, Kanagawa 254-0807 (JP); Kaneta, Koji, Kanagawa-ken, Kanagawa 254-0807 (JP); Fujii, Kenji, Kanagawa-ken, Kanagawa 254-0807 (JP); Tanaka, Fuminori, Kanagawa-ken, Kanagawa 254-0807 (JP)
(74) Representative: Kronthaler, Wolfgang N.K.

(57) **Abstract**

A main pipe (30) is lined by a main pipe lining material (20) comprising a resin pipe (20a) made of a thermoplastic resin. A flange (3, 11) of a lateral pipe lining material (1) is formed of a material capable of being welded to the thermoplastic resin of the resin pipe (20a) of the main pipe lining material (20). The thermoplastic resins of the flange (3, 11) of the lateral pipe lining material (1) and the resin pipe (20a) are heated for plastic welding by a heater (81) to integrally join the flange of the lateral pipe lining material (1) with the main pipe lining material (20). This prevents the ingress of underground water together with sediment into the main pipe from the section where the lateral pipe and the main pipe intersect.

## Description

The present invention relates to a lateral pipe lining method and apparatus in which a lateral pipe lining material for lining a lateral pipe is inserted into the lateral pipe from a lateral pipe opening of a main pipe, which is lined using a main pipe lining material composed of a resin pipe made of thermoplastic resin, or using a main pipe lining material composed of a tubular resin-absorbing material covered with a plastic film of thermoplastic resin.

In cases where pipelines such as sewer pipes buried underground are aged, a pipe lining method for lining the inner circumferential surface of a pipeline is known to make repairs without having to excavate the pipeline from the ground.

For example, JP 2008-25761 A discloses a method for lining a main pipe using a main pipe lining material which comprises a resin pipe composed of a thermoplastic resin and a reinforcing protruding rib wound in a spiral pattern around the outer circumferential surface of the resin pipe. The main pipe lining material is first folded up and drawn into the main pipe, and then restored so as to be circular in cross section. A grout material is injected between the inner circumferential surface of the main pipe and the outer circumferential surface of the resin pipe.

According to a method disclosed in JP 2006-130899 A, a main pipe lining material composed of a flexible tubular resin-absorbing material which is covered on the outer circumferential surface with a highly airtight film and is impregnated with a curable resin is inserted into a pipeline while being everted by fluid pressure. With the main pipe lining material being pressed against the inner circumferential surface of the pipeline by fluid pressure, the material is heated to cure the resin impregnated therein to line the inner circumferential surface thereof.

Methods such as these can be applied to lateral pipes that branch from a main pipe as well. In the case of lining a lateral pipe, a flange formed at one end of a tubular lateral pipe lining material packaged in a pressure bag is seated onto the head collar of a work robot which is guided inside the main pipe. The work robot is driven to bring the flange of the lateral pipe lining material into close contact with the periphery of the lateral pipe opening of the main pipe. Once compressed air is supplied into the pressure bag, the lateral pipe lining material is inserted into the lateral pipe while being everted by the pressure of the compressed air. Upon the completion of the everting and inserting of the material along the entire length of the lateral pipe, the material is heated in a state in which the lateral pipe lining material is pressed against the inner circumferential surface of the lateral pipe. This causes the thermosetting resin in the lateral lining material to be cured, thus lining the inner circumferential surface of the lateral pipe.

Lateral pipe lining of this sort is typically carried out prior to main pipe lining, but is sometimes carried out after main pipe lining has been installed (called "after-lining").

In the case of after-lining, a packing is attached to the flange of the lateral pipe lining material, or an adhesive is applied thereto, in order to improve close contact of the flange of the lateral pipe lining material with the lateral pipe opening periphery of the main pipe which has been lined with the main pipe lining material. This aims to improve joining of the main pipe lining material and the lateral pipe lining material and prevent the ingress of underground water together with sediment into the main pipe from the section where the lateral pipe and the main pipe intersect (JP 2008-38393 A).

According to the configuration of JP 2008-38393 A, a packing is attached or an adhesive is applied to the flange of the lateral pipe lining material, which is then brought into close contact with the main pipe lining material and joined thereto. Therefore, drawbacks are presented in that manufacturing costs are high, and, particularly in cases where the flange of the lateral pipe lining material is rigid, close contact may not be sufficient, so that there is insufficient joining between the lateral pipe lining material and the main pipe lining material.

It is therefore an object of the present invention to provide a lateral pipe lining method and apparatus being capable of improving joining of the lateral pipe lining material and the main pipe lining material to provide highquality lining of the lateral pipe.

The present invention provides a lateral pipe lining method in which a lateral pipe lining material for lining a lateral pipe is inserted into the lateral pipe from a lateral pipe opening of a main pipe, which is lined using a main pipe lining material composed of a resin pipe made of thermoplastic resin, or using a main pipe lining material composed of a tubular resin-absorbing material covered with a plastic film of thermoplastic resin. The method comprises transporting into the main pipe a lateral pipe lining material made of a flexible tubular resin-absorbing material impregnated with a curing resin and having at one end a flange formed which is made of a material capable of being welded to the thermoplastic resin of the resin pipe of the main pipe lining material or of the plastic film of the tubular resin-absorbing material thereof; bringing the flange of the lateral pipe lining material into close contact with a periphery of the lateral pipe opening of the main pipe that is lined by the main pipe lining material; and heating and welding the thermoplastic resin of the flange of the lateral pipe lining material and the thermoplastic resin of the resin pipe or of the plastic film of the main pipe lining material to integrally join the flange of the lateral pipe lining material with the main pipe lining material.

The present invention also provides a lateral pipe lining apparatus in which a lateral pipe lining material for lining a lateral pipe is inserted into the lateral pipe from a lateral pipe opening of a main pipe, which is lined using a main pipe lining material composed of a resin pipe made of thermoplastic resin, or using a main pipe lining material composed of a tubular resin-absorbing material covered with a plastic film of thermoplastic resin. The apparatus comprises a head collar having a curving section; heating means attached to the curving section of the head collar; a lateral pipe lining material that includes a flexible tubular resin-absorbing material impregnated with a curing resin and having at one end a flange formed of a material capable of being welded to the thermoplastic resin of the resin pipe or of the plastic film of the main pipe lining material, the lateral pipe lining material being seated onto the head collar so that the flange is heated by the heating means; a pressure bag that is attached airtightly to the head collar and houses the lateral pipe lining material therein; and a work robot for guiding the pressure bag so that the flange of the lateral pipe lining material comes into close contact with the lateral pipe opening periphery of the main pipe lined by the main pipe lining material; wherein the thermoplastic resin of the flange of the lateral pipe lining material and the thermoplastic resin of the resin pipe or of the plastic film of the main pipe lining material are heated for plastic welding to integrally join the flange of the lateral pipe lining material with the main pipe lining material.

According to the present invention, the main pipe is lined using a main pipe lining material composed of a resin pipe made of thermoplastic resin, or a main pipe lining material composed of a flexible tubular resin-absorbing material covered by a plastic film of thermoplastic resin. The lateral pipe lining material is formed with a flange of a material capable of being welded to the thermoplastic resin of the resin pipe or of the plastic film of the main pipe lining material. The thermoplastic resin of the flange of the lateral pipe lining material and the thermoplastic resin of the resin pipe or of the plastic film are heated for plastic welding to integrally join the flange of the lateral pipe lining material with the main pipe lining material. This allows the flange of the lateral pipe lining material to be reliably joined with ease with the main pipe lining material, thus preventing inflow of underground water together with sediment into the main pipe from the section where the lateral pipe and the main pipe intersect.

Preferably, the thermoplastic resin of the resin pipe or of the plastic film of the main pipe lining material and the thermoplastic resin of the flange of the lateral pipe lining material are the same resin and are soft, so that the flange reliably comes into close contact with the main pipe lining material, thus allowing plastic welding to be readily and reliably carried out.

Further features of the invention, its nature and various advantages will be more apparent from the accompanying drawings and following detailed description of the invention.
FIG. 1 is a side view showing in partially cross section the exterior of a main pipe lining material that is used to line a main pipe;
FIG. 2 is an illustrative view showing the interior of a main pipe lined using the main pipe lining material of FIG. 1;
FIG. 3 is an illustrative view showing a lined main pipe when a lateral pipe opening of the main pipe is opened;
FIG. 4 is a perspective view of a lateral pipe lining material for lining a lateral pipe that intersects a main pipe;
FIG. 5a is an illustrative view showing a manufacturing step of a lateral pipe lining material;
FIG. 5b is an illustrative view showing a following manufacturing step of the lateral pipe lining material;
FIG. 6 is an illustrative view showing one embodiment in which a flange is attached to a tubular resin-absorbing material;
FIG. 7 is an illustrative view showing a process of impregnating with a resin a tubular resin-absorbing material of a lateral pipe lining material;
FIG. 8 is an illustrative view showing another embodiment in which a flange is attached to a tubular resin-absorbing material;
FIG. 9 is a perspective view showing a head collar which is attached to a work robot and on which a lateral pipe lining material is seated;
FIG. 10a is a perspective view showing a state in which a heater is seated on a head collar+
FIG. 10b is a perspective view when the lateral pipe lining material has been seated over the heater;
FIG. 11 is an illustrative view showing a process of lining a lateral pipe with a lateral pipe lining material;
FIG. 12 is an illustrative view showing a next process of lining a lateral pipe with a lateral pipe lining material;
FIG. 13 is an illustrative view showing a next process of lining a lateral pipe with a lateral pipe lining material;
FIG. 14 is a cross sectional view showing in detail lining of the periphery of a lateral pipe opening of a main pipe;
FIG. 15 is a cross sectional view showing in detail lining of the periphery of a lateral pipe opening of a main pipe, viewed from a direction orthogonal to FIG. 14;
FIG. 16 is a perspective view showing another embodiment of a main pipe lining material;
FIG. 17 is an illustrative view showing the interior of a main pipe viewed when the main pipe is lined with the main pipe lining material of FIG. 16 and a lateral pipe opening thereof is opened;
FIG. 18 is a cross sectional view showing in detail lining of the periphery of a lateral pipe opening of a main pipe; and
FIG. 19 is a cross sectional view showing in detail lining of the periphery of a lateral pipe opening of a main pipe, viewed from a direction orthogonal to that of FIG. 18.

The present invention will now be described in detail based on the attached drawings with reference to the embodiments of a lateral pipe lining material for lining a lateral pipe that branches from a main pipe, and a lateral pipe lining method as well as a lateral pipe lining apparatus. The main pipe is an existing pipe such as a sewer pipe, water supply pipe, agricultural water channel, or the like, and the lateral pipe is a pipe which is attached to the main pipe and branches therefrom to the ground.

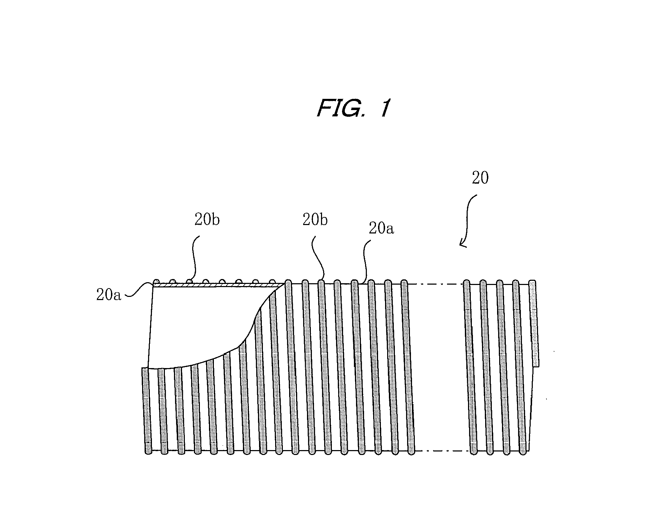

In FIG. 1, a main pipe lining material 20 for lining a main pipe is shown partially in cross section. The main pipe lining material 20 comprises a tubular resin pipe 20a having an outside diameter smaller than the inside diameter of the main pipe, and a reinforcing protruding rib 20b that is wound in a spiral pattern about the outside wall of the resin pipe 20a. The resin pipe 20a is formed, for example, of a soft thermoplastic resin such as polyethylene, polypropylene, or the like, optionally compounded with a predetermined proportion of an elastomer to raise the elasticity of the resin pipe 20a. The resin pipe 20a can also have a two-layer structure instead of a single layer as illustrated. The protruding rib 20b is made of the same resin as the resin pipe 20a, but is more rigid than the resin pipe 20a due to a change in the compounding ratio of the elastomer for the purpose of reinforcing the resin pipe 20a. Such a main pipe lining material 20 is disclosed in JP 2008-25761 A, for example.

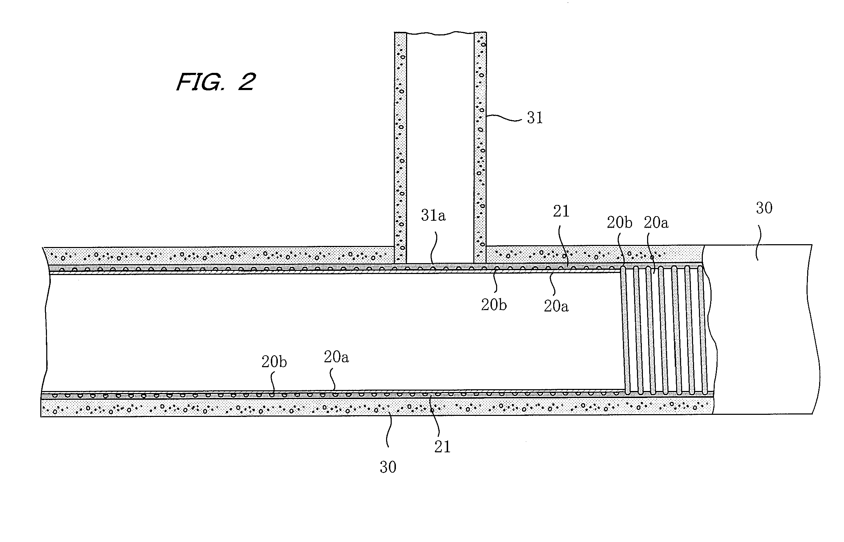

Since the resin pipe 20a and the protruding rib 20b are elastically deformable, the main pipe lining material 20 may be folded into, for example, a heart shape, then drawn inside the main pipe 30 from one manhole (not illustrated), and subsequently restored so as to be circular in cross section, as shown in FIG. 2, by self-repelling force or by feeding compressed air into the resin pipe 20a. A grout material 21 is injected into a gap formed between the outer circumferential surface of the resin pipe 20a and the inner circumferential surface of the main pipe 30 and is caused to harden to unify the main pipe 30 and the main pipe lining material 20 and constitute a composite pipe.

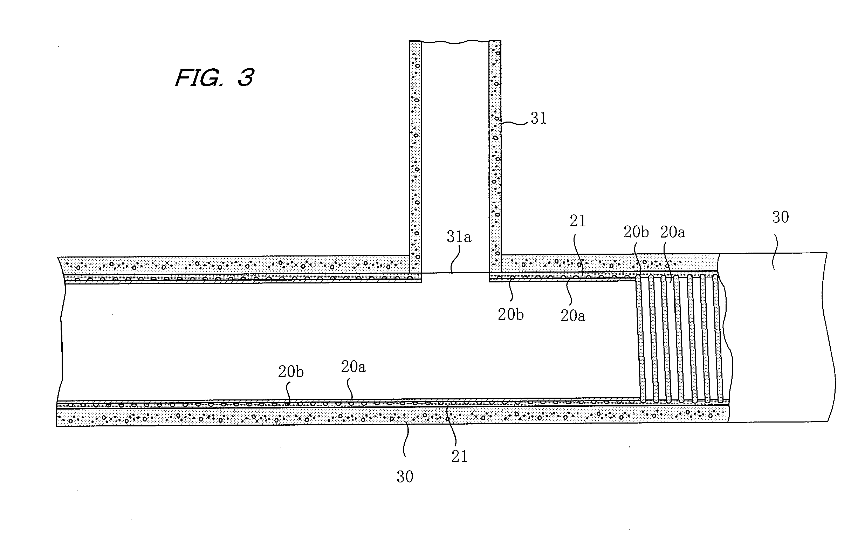

When the main pipe 30 is lined with the main pipe lining material 20, an opening 31a on the side of the main pipe of a lateral pipe 31 that branches therefrom is caused to be closed. A known method is used to cut open the lateral pipe opening 31a closed by the main pipe lining material 20 from the main pipe side or the lateral pipe side. This allows the original communication between the main pipe 30 and the lateral pipe 31 to be restored as shown in FIG. 3.

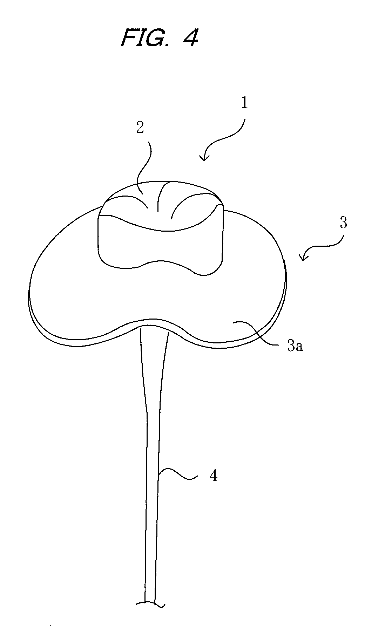

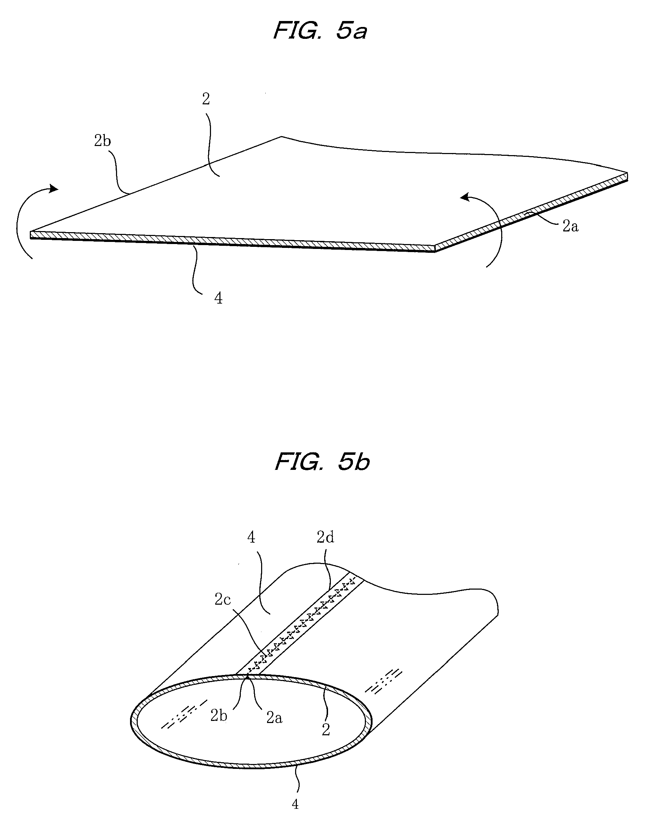

FIG. 4 is a perspective view of a lateral pipe lining material for lining the lateral pipe 31, and FIGS. 5 to 7 are cross-sectional views showing a method for the manufacture thereof.

The lateral pipe lining material 1 includes a flexible tubular resin-absorbing material 2 coated on the outer circumferential surface (which becomes the inner circumferential surface when everted) with an airtight plastic film 4, and a flange 3 joined to one end of the tubular resin-absorbing material 2. The tubular resin-absorbing material 2 is composed of non-woven fabric, woven fabric, or a mat using plastic fibers of polyamide, polyester, polypropylene, or the like; a woven fabric or a mat using glass fibers; or a non-woven fabric, woven fabric, or a mat that combine these plastic fibers and glass fibers. The tubular resin-absorbing material 2 is impregnated with a liquid, curable resin such as a thermosetting resin or a photocuring resin.

This lateral pipe lining material 1 is manufactured as follows.

As shown in FIG. 5a, the entire back surface of a strip of the flexible resin absorbing material 2 of predetermined width and predetermined length is coated with the highly airtight plastic film 4 by plastic welding or heat sealing. As shown in FIG. 5b, the strip of resin absorbing material 2 is then rolled up with the plastic film 4 at the outer circumferential surface thereof, and the edges 2a, 2b are contacted together. The abutted section 2c is stitched and joined air tightly by plastic welding with a tape 2d made of polyethylene or polypropylene. Thus, the tubular resin-absorbing material 2 is fabricated which is covered on the outer circumferential surface thereof with the plastic film 4.

Rather than coating the strip of resin absorbing material with the plastic film 4 and forming it into a pipe shape, the uncoated strip of resin absorbing material may be formed into a pipe shape, and the outer circumferential surface thereof is then coated with the plastic film 4.

As will be discussed later, the tubular resin-absorbing material 2 is everted and inserted into the lateral pipe 31, and inflated to a circular shape. The width of the strip of resin absorbing material is determined such that the outside diameter of the tubular resin-absorbing material 2 will, upon having inflated to a circular shape, be substantially equal to the inside diameter of the lateral pipe 31, and the length thereof is commensurate with the length of the lateral pipe 31 to be lined.

The flange 3 is fabricated using a soft thermoplastic resin which can be heat-sealed or plastic-welded with the resin used for the resin pipe 20a of the main pipe lining material 20. For example, in a case where the resin pipe 20a has been fabricated using polyethylene, the flange 3 is also fabricated using polyethylene; or in a case where the resin pipe 20a has been fabricated using polypropylene, the flange 3 is also fabricated using polypropylene. Thus, the flange 3 is composed of a thermoplastic resin that can be thermally fused and integrally joined with the thermoplastic resin of the resin pipe 20a by heat sealing or plastic welding.

For the plastic film 4 with which the tubular resin-absorbing material 2 is coated, a soft thermoplastic resin that can be heat-sealed to the thermoplastic resin of the flange 3 is selected. For example, in a case where the flange 3 is made of polyethylene, the plastic film 4 is also produced using polyethylene. In a case where the flange 3 is made of polypropylene, the plastic film 4 is also produced using polypropylene.

The flange 3 is composed of a flange section 3a with an opening at the center, and a circular cylindrical section 3b integral with the flange section 3a and projecting upward from the opening. The outside diameter of the circular cylindrical section 3b is substantially equal to the inside diameter of the tubular resin-absorbing material 2 when everted and expanded to a circular shape. The flange section 3a of the flange 3 has a curving surface that curves in an arc with a curvature substantially equal to that of the inside circumferential surface of the main pipe 30.

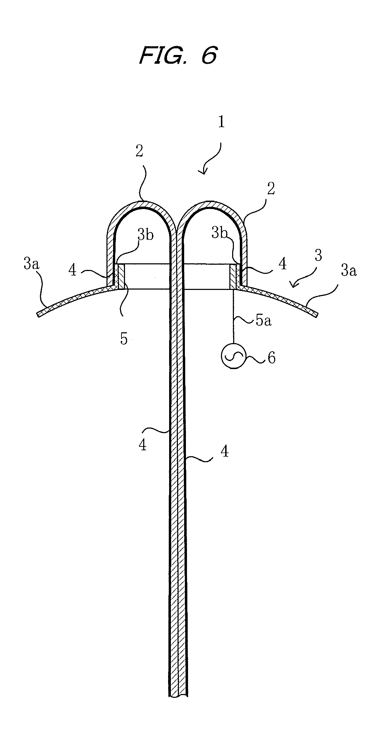

As shown in FIG. 6, one end of the tubular resin-absorbing material 2 is everted such that the plastic film 4 becomes the inner circumferential surface thereof, and the everted tubular resin-absorbing material 2 is then fittably attached about the circular cylindrical section 3b of the flange 3, so that the one end of the resin-absorbing material 2 comes into close contact with the outer circumferential surface of the circular cylindrical section 3b of the flange 3.

Next, a ring-shaped heater (heating means) 5, for example, made of nichrome wire, is inserted inside the circular cylindrical section 3b from the end of the tubular resin-absorbing material 2 on the opposite side from the flange 3, and is attached to the section at which the circular cylindrical section 3b and the plastic film 4 are in close contact. When the heater 5 is supplied with power from a power supply 6 via a lead wire 5a, the thermoplastic resin of the circular cylindrical section 3b of the flange 3 and the plastic film 4 are fused and bonded together by heat seal, and the flange 3 becomes integrally joined with the tubular resin-absorbing material 2. In order to increase the degree of joining of the flange 3 and the tubular resin-absorbing material 2, it is preferable to increase the height of the circular cylindrical section 3b to increase the contact surface area between the circular cylindrical section 3b and the plastic film 4.

The heating temperature of the heater 5 is set to an appropriate temperature within a temperature range of approximately 105°-150°C depending on the material of the thermoplastic resin of the circular cylindrical section 3b and the material of the plastic film 4.

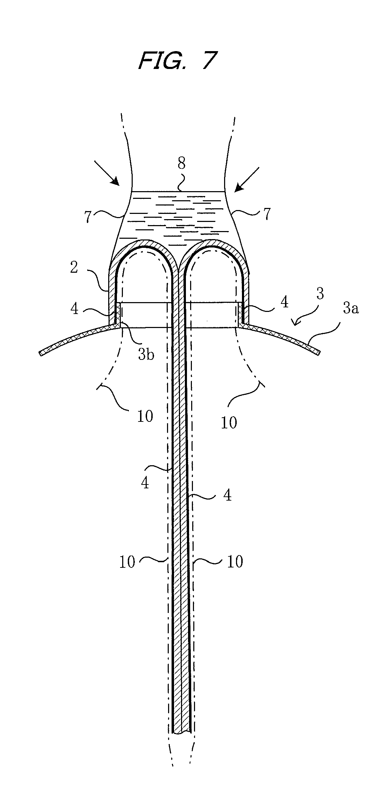

After the flange 3 and the tubular resin-absorbing material 2 have been joined this manner, a resin impregnation tube 7 is, as shown in FIG. 7, attached to the everted end of the tubular resin-absorbing material 2, and an uncured liquid curing resin 8, for example, an unsaturated polyester resin, a vinyl ester resin, an epoxy resin, or other such thermosetting resin is injected into the resin impregnation tube 7. The resin impregnation tube 7 is everted using compressed air or the like and inserted into the tubular resin-absorbing material 2, whereby the tubular resin-absorbing material 2 is progressively impregnated with the curing resin 8. Instead of or in addition to a thermosetting resin, the tubular resin-absorbing material 2 may be impregnated with a photocuring resin that is cured by UV irradiation. After impregnation with the resin, the resin impregnation tube 7 is removed from the tubular resin-absorbing material 2.

In FIG. 7, the alternately dotted and dashed line shows a sealing tube 10 for everting and inserting the lateral pipe lining material 1 into the lateral pipe. The sealing tube 10, also called an in-liner or inflator (inflation bag), is attached to a pressure bag, as discussed below.

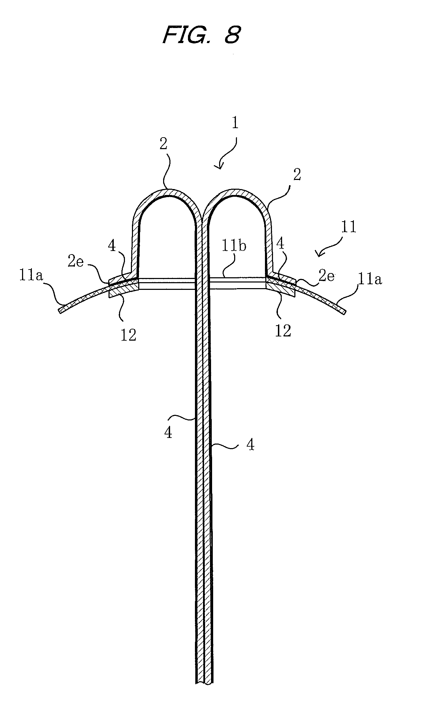

FIG. 8 shows another embodiment of a flange. In this embodiment, a flange 11, like the flange 3, is composed of a soft thermoplastic resin capable of being welded to the resin pipe 20a of the main pipe lining material 20. The flange 11 includes a flange section 11a that is provided at a center with an opening substantially equal to the inside diameter of the tubular resin-absorbing material 2 when everted and inflated to a circular shape. The flange section 11a has a surface that curves in an arc with a curvature equal to that of the inside circumferential surface of the main pipe 30. The plastic film 4 with which the tubular resin-absorbing material 2 is covered is made of the same resin as the thermoplastic resin of the flange 11.

In FIG. 8, the tubular resin-absorbing material 2 is likewise everted at one end, and the everted end thereof is folded over to form a folded over section 2e. The tubular resin-absorbing material 2 is attached to the flange 11 in such a way that the inner circumferential surface of the plastic film 4 comes at the folded over section into close contact with the upper part of the flange section 11a of the flange 11. From the end of the tubular resin-absorbing material 2 on the opposite side from the flange 11, a ring-shaped heater (heating means) 12 composed of nichrome wire is attached to the section at which the flange section 11a of the flange 11 comes into close contact with the plastic film 4 of the folded over section 2e.

When the heater 12 is supplied with power, the thermoplastic resin of the flange section 11a and the plastic film 4 are heat-sealed (plastic-welded). This allows the flange 11 to be integrally joined with the tubular resin-absorbing material 2. In order to increase the degree of joining of the flange 11 and the tubular resin-absorbing material 2, it is preferable to increase the length of the folded over section 2e of the tubular resin-absorbing material 2 to increase the contact surface area at which the flange section 11a comes into close contact with the plastic film 4 of the folded over section 2e.

As in the case of the heater 5, the heating temperature of the heater 12 is set to within a temperature range of approximately 105°-150°C depending on the material of the thermoplastic resin of the flange section 11a and the material of the plastic film 4.

Next, a lining process will be described in which, using the lateral pipe lining material 1 as described above, the lateral pipe 31 is lined that branches from the main pipe 30 lined with the main pipe lining material 20 as shown in FIG. 3.

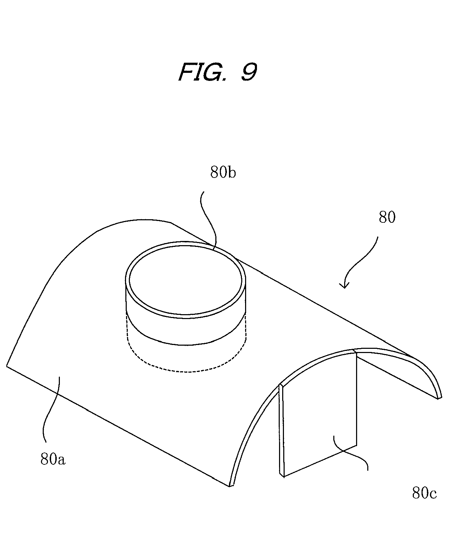

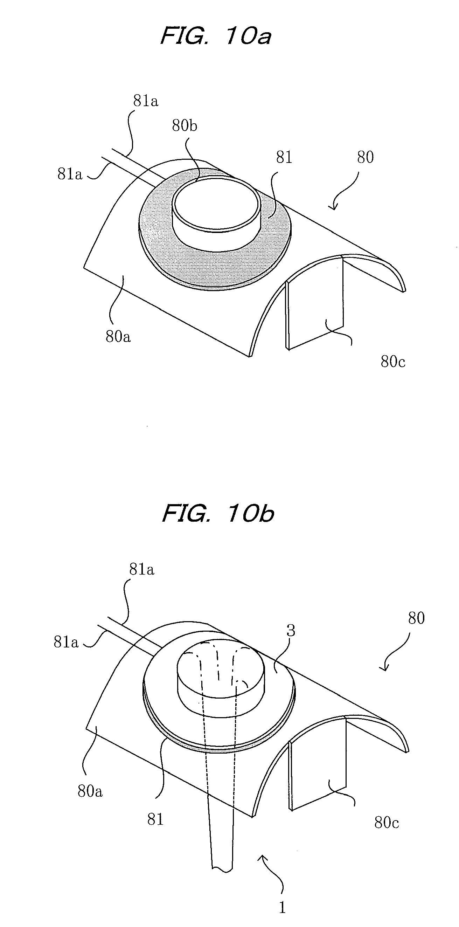

FIG. 9 shows a head collar 80 made of metal, for attachment to a work robot that is introduced into a main pipe. The lateral pipe lining material 1 is seated onto the head collar 80 as shown in FIG. 10b.

The head collar 80 has a section 80a that curves at substantially the same curvature as the inner circumferential surface of the main pipe 30 and the flanges 3, 11 of the lateral pipe lining material 1. The head collar 80 also has a circular cylindrical section 80b that is fixedly attached to the center of the curving section 80a.

An attachment plate 80c for attaching the head collar 80 to a work robot, discussed later, is secured to the curving section 80a.

As shown in FIG. 10a, a ring-shaped heater (heating means) 81 of the same shape as the flange 3 of the lateral pipe lining material 1 having inside diameter substantially equal to the outside diameter of the circular cylindrical section 80b of the head collar 80 is attached to the curving section 80a thereof. The heater 81 is composed of a nichrome wire or the like that generates heat when supplied with power via a lead wire 81a, and is covered by a heat-resistant material that is elastic so as to impart elasticity in the vertical direction as seen in the drawing.

In order to increase elasticity, a heat-resistant elastic body of the same shape as the heater 81 may be seated between the curving section 80a and the heater 81. Alternatively, in order to increase elasticity, a heat-resistant elastic body of the same shape as the heater 81 may be seated on the heater 81 which has been seated on the curving section 80a.

As shown in FIG. 10b, the lateral pipe lining material 1 is seated on the head collar 80 in such a way that the flange 3 comes into close contact with the heater 81 and the tubular resin-absorbing material 2, which has not yet been everted except for the flange 3, extends downward through the inside of the circular cylindrical section 80b of the head collar 80.

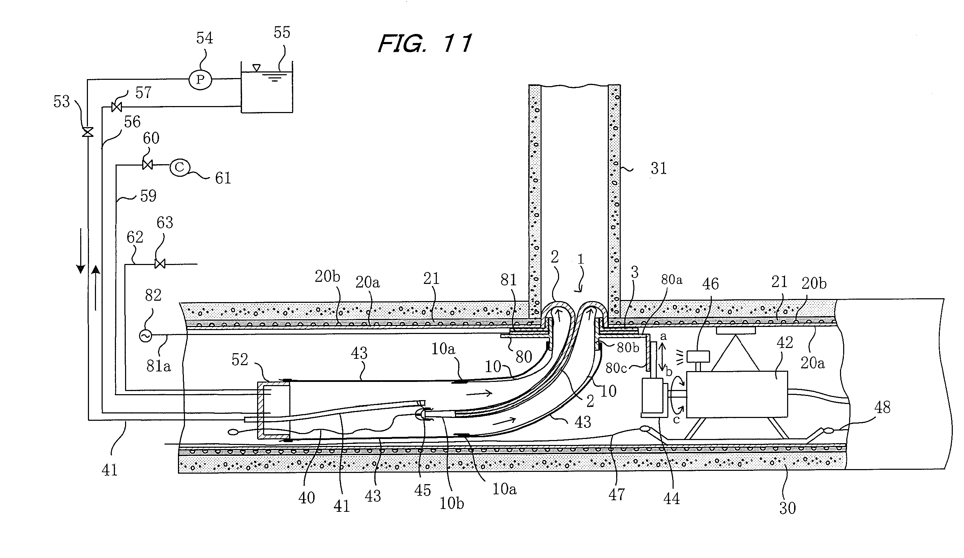

As shown in FIGS. 7 and 11, a sealing tube 10 for everting the lateral pipe lining material 1 is set so as to encapsulate the uneverted portion of the lateral pipe lining material 1 with one end 10a thereof secured air tightly to the inside surface of a pressure bag 43 and the other end 10b attached air tightly to a linking fixture 45. As shown in FIG. 11, the uneverted portion of the lateral pipe lining material 1 on the head collar 80 is inserted into the interior of the sealing tube 10 and housed inside the pressure bag 43 together with the sealing tube 10.

The circular cylindrical section 80b of the head collar 80 is inserted into one end of the pressure bag 43 and attached air tightly thereto, while the open end of the pressure bag 43 at the opposite side from the head collar 80 is closed air tightly by a cap 52.

A tow rope 40 and a hot water hose 41 attached air tightly to the cap 52 are linked to the linking fixture 45 which closes the other end 10b of the sealing tube 10. The hot water hose 41 passes through the cap 52 to exit to the outside of the pressure bag 43, and is connected to a valve 53. The hot water hose 41 is supplied via a hot water pump 54 with hot water (a heat medium) from a hot water tank 55 which is heated by a heat source (not shown). Hot water inside the pressure bag 43 is returned to the hot water tank 55 via a discharge hose 56 and a valve 57.

The sealing tube 10 allows a hermetic space to be created inside the pressure bag 43. The hermetic space is connected to a compressor 61 above ground via a valve 60 and an air hose 59 attached to the cap 52, and also communicates with the outside via a vent hose 62 and a valve 63.

A work robot 42 is configured such that a head 44 thereof extends and retracts in up and down directions a, b in FIG. 11 while rotating (rolling) about a center on the pipe axis as shown by an arrow c. A TV camera 46 for monitoring purposes is installed on top of the work robot 42. The head collar 80 is attached to a distal end of the head 44 of the work robot 42 via the attachment plate 80c thereof. As the head 44 moves in directions a, b, and c, the head collar 80 and the lateral pipe lining material 1 seated thereon move in similar fashion in conjunction with the movement of the head 44.

Tow ropes 47, 48 are attached to the front and back of the work robot 42, and pulled with a winch or the like to move the work robot 42 and the pressure bag 43 in the pipe lengthwise direction until the center of the flange 3 of the lateral pipe lining material 1 coincides with the center of the opening 31a of the lateral pipe 31. In this state, the head 44 is moved up and down and is caused to roll. This, as shown in FIG. 11, allows the flange 3 of the lateral pipe lining material 1 to be brought into close contact with the lateral pipe opening periphery of the main pipe 30 which is lined with the main pipe lining material 20.

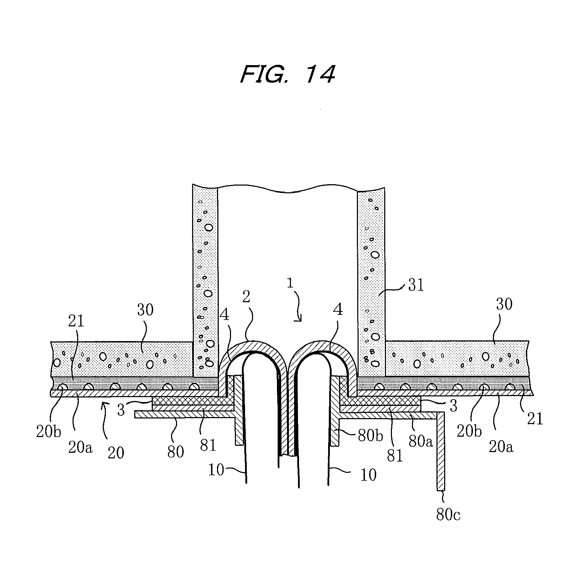

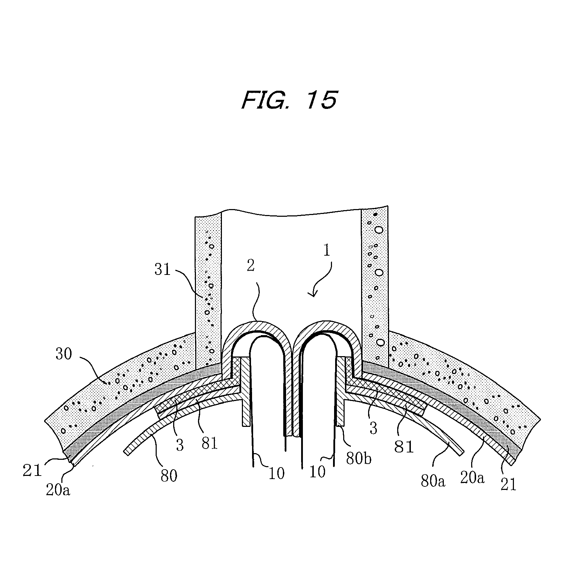

FIG. 14 is an enlarged cross-sectional view showing the sate in which the flange 3 of the lateral pipe lining material 1 comes into close contact with the lateral pipe opening periphery of the main pipe 30, and FIG. 15 is an enlarged cross-sectional view taken along a direction orthogonal to the cross section shown in FIG. 14. In FIGS. 14 and 15, the size, thickness, etc. of members shown in cross section do not show actual dimensions, but are depicted partly exaggerated in order to aid understanding.

In the sates as shown in FIGS. 14 and 15, the compressor 61 is driven to supply compressed air (pressurized fluid) to the hermetic space inside of the pressure bag 43 through the air hose 59. This causes the sealing tube 10 to be everted and inserted while being inflated into the lateral pipe 31. The lateral pipe lining material 1 wrapped in the sealing tube 10 is also successively everted and inserted towards the upper side inside the lateral pipe 31. At this time, the hot water hose 41 and the tow rope 40 which are linked to the sealing tube 10 via the linking fixture 45 are also inserted into the lateral pipe 31.

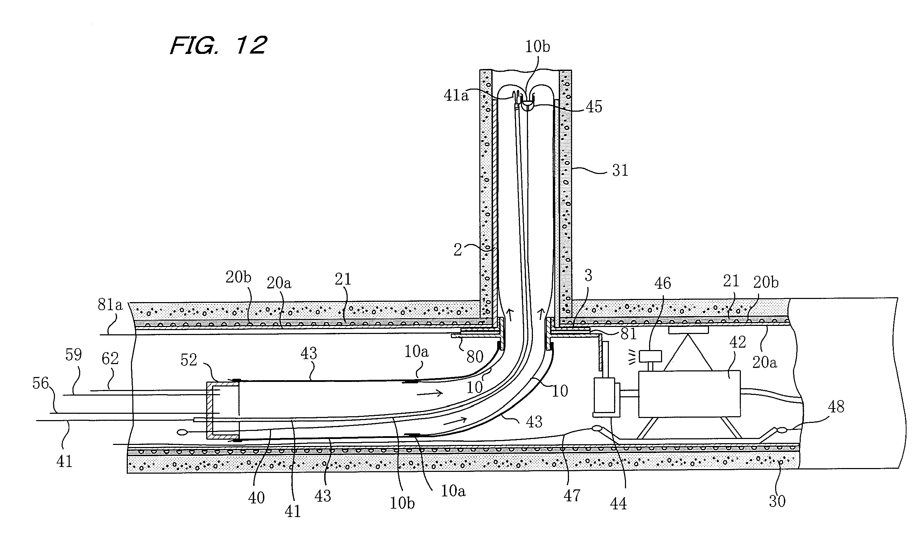

As shown in FIG. 12, the tubular resin-absorbing material 2 assumes a state of being pressed against the inner circumferential surface of the lateral pipe 31 after the tubular resin-absorbing material 2 is finished being everted and inserted into the lateral pipe 31. Hot water is then supplied from a distal end 41a of the hot water hose 41 and the inside of the hermetic space is filled with the hot water. This causes the compressed air inside the hermetic space to be released into the atmosphere through the vent hose 62 and the thermosetting resin in the tubular resin-absorbing material 2 to be heated and cured due to the hot water supplied from the hot water tank 55.

The heater 81 is supplied with power by a power source 82 via the lead wire 81a when the lateral pipe lining material 1 is being everted and inserted into the lateral pipe 31, or when the resin with which the tubular resin-absorbing material is impregnated is being cured after the lateral pipe lining material 1 has been inserted into the lateral pipe. The heater 81 heats the thermoplastic resin of the flange 3 of the lateral pipe lining material 1 as well as the thermoplastic resin of the resin pipe 20a of the main pipe lining material 20 to a temperature of, for example, approximately 105°-150°C. This heating temperature is set to an appropriate temperature within a range of approximately 105°-150°C depending on the material of the thermoplastic resins. The thermoplastic resin of the flange 3 and the thermoplastic resin of the resin pipe 20a are the same resin; for example, polyethylene or polypropylene resin, so that they are readily and reliably heat-sealed (plastic-welded). This causes the flange 3 of the lateral pipe lining material 1 and the resin pipe 20a of the main pipe lining material 20 to be integrally joined, preventing the ingress of underground water together with sediment into the main pipe from the joined section of the main pipe 30 and the lateral pipe 31.

The thermoplastic resin of the flange of the lateral pipe lining material and of the main pipe lining material may be heated before the tubular resin-absorbing material 2 begins to be everted and inserted into the lateral pipe 31, i.e., before the compressor 61 is driven to supply compressed air to the pressure bag in the sate in which the flange 3 of the lateral pipe lining material comes into close contact with the lateral pipe opening periphery of the main pipe, as shown in FIG. 11.

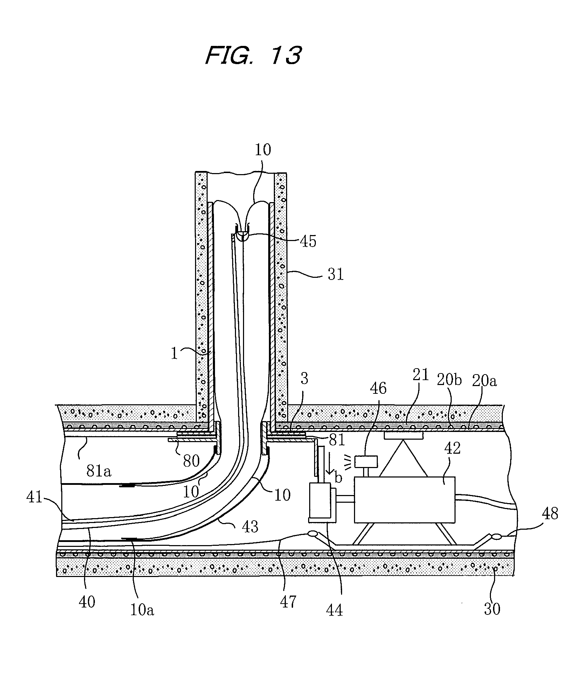

After the resin with which the tubular resin-absorbing material 2 is impregnated has cured, the hot water is drained from the hermetic space via the discharge hose 56, and returned to the hot water tank 55. After the hot water is returned to the hot water tank 55, the tow rope 40 and the hot water hose 41 are pulled in the leftward direction in FIG. 13 while a certain extent of pressure is applied to the hermetic space. The sealing tube 10 is then everted and extracted from the lateral pipe lining material 1.

Next, the head 44 of the work robot 42 is moved down in the direction of arrow b, the head collar 80 and the heater 81 are separated from the flange 3 of the lateral pipe lining material 1, and the work robot 42, the pressure bag 43, and the like are thereafter extracted from inside the main pipe 30. The lateral pipe 31 is thus lined on the inner circumferential surface thereof by the tubular resin-absorbing material 2.

The resin with which the tubular resin-absorbing material 2 is impregnated may be cured by providing the hot water hose 41 with a plurality of spray holes and spraying therefrom hot water or steam as a shower or a mist against the tubular resin-absorbing material 2.

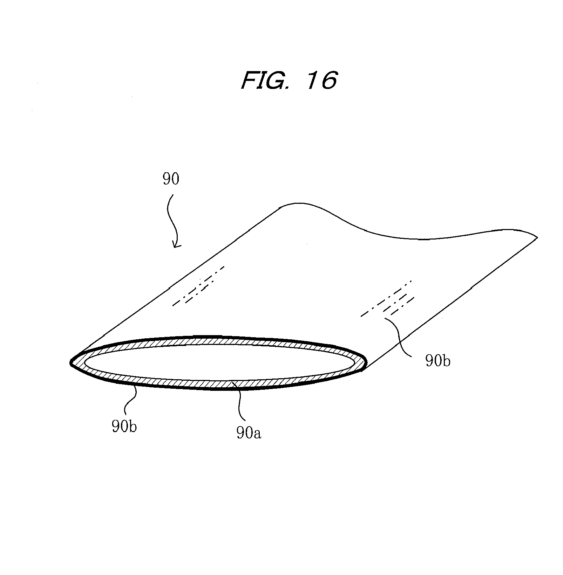

In the above-described embodiment, the main pipe 30 is lined using the main pipe lining material 20 composed of the resin pipe 20a and the reinforcing protruding rib 20b wound in a spiral pattern about the outside wall thereof. However, lining may be performed using a main pipe lining material 90, as shown in FIG. 16, which includes a flexible tubular resin-absorbing material 90a impregnated with a curable resin and coated on its outer circumferential surface with an airtight plastic film 90b.

The tubular resin-absorbing material 90a of the main pipe lining material 90 is fabricated of the same material as the tubular resin-absorbing material 2 of the lateral pipe lining material 1, and the tubular resin-absorbing material 90a is impregnated with an uncured liquid resin such as a thermosetting resin, a photocuring resin, or the like. The plastic film 90b with which the tubular resin-absorbing material 90a is covered is made of a soft thermoplastic resin capable of being welded to the thermoplastic resin of the flange 3 of the lateral pipe lining material 1. For example, in a case where the flange 3 is fabricated using polyethylene, the plastic film 90b is also fabricated using polyethylene. Alternatively, in a case where the flange 3 is fabricated using polypropylene, the plastic film 90b is also fabricated using polypropylene.

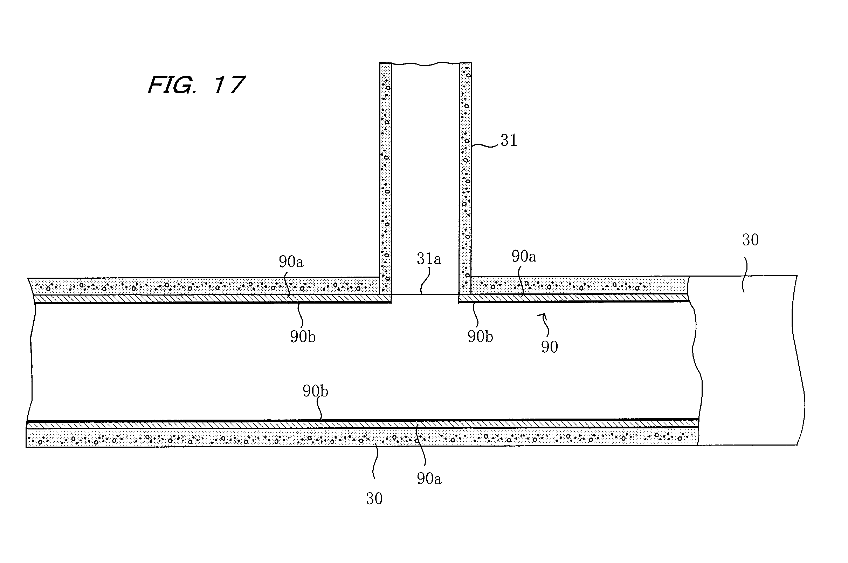

The main pipe lining material 90 is everted and inserted into the main pipe 30 by a known method, and, as shown in FIG. 17, the tubular resin-absorbing material 90a is heated in a state of being pressed against the inner circumferential surface of the main pipe 30 to cure the thermosetting resin in the resin-absorbing material 90a. The main pipe 30 is thus lined by the main pipe lining material 90. The opening 31a of the lateral pipe 31 that has been closed by the main pipe lining material 90 is cut open, and the main pipe 30 communicates with the lateral pipe 31.

Thereafter, in fashion similar to that shown in FIGS. 11 to 13, the lateral pipe 31 is lined using the lateral pipe lining material 1.

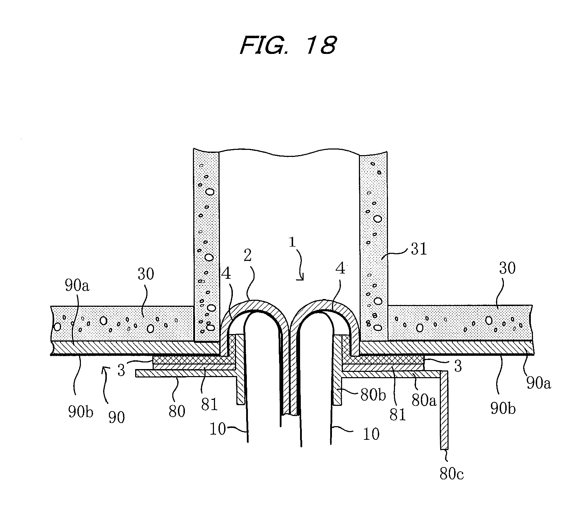

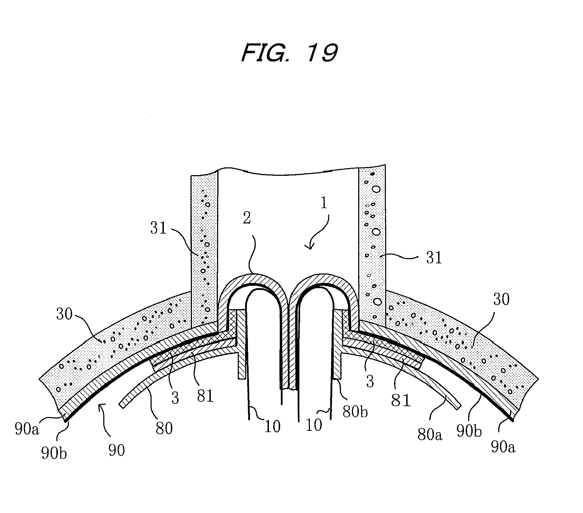

Similarly to FIG. 14, FIGS. 18 and 19 show in enlarged view a state in which the flange 3 of the lateral pipe lining material 1 comes into close contact with the main pipe lining material 90 at the lateral pipe opening periphery of the main pipe. In this state, the heater 81 is supplied with power before the lateral pipe lining material 1 is inserted into the lateral pipe 31, or when it is being inserted into the lateral pipe 31, or when it has been inserted into the lateral pipe 31 and the resin in the tubular resin-absorbing material 90 is cured. The heater 81 heats the thermoplastic resin of the flange 3 of the lateral pipe lining material 1 and the thermoplastic resin of the plastic film 90b of the main pipe lining material 90. The thermoplastic resin of the flange 3 and the thermoplastic resin of the plastic film 90b are the same resin; for example, polyethylene or polypropylene resin, so that they are readily and reliably heat-sealed or welded. This causes the flange 3 of the lateral pipe lining material 1 and the main pipe lining material 90 to be integrally joined, preventing water leakage from the joined section of the main pipe and the lateral pipe or the ingress of sediment into the main pipe from in the ground, as is the same with the case of using the main pipe lining material 20.

In the above-described embodiment, the lateral pipe is lined using the lateral pipe lining material 1 shown in FIG. 6. However, as shall be apparent, the lateral pipe can be lined using the lateral pipe lining material 1 of the embodiment as shown in FIG. 8.

## Claims

1. A lateral pipe lining method in which a lateral pipe lining material (1) for lining a lateral pipe (31) is inserted into the lateral pipe from a lateral pipe opening of a main pipe (30), which is lined using a main pipe lining material (20) composed of a resin pipe (20a) made of thermoplastic resin, or using a main pipe lining material (90) composed of a tubular resin-absorbing material (90a) covered with a plastic film (90b) of thermoplastic resin, comprising:
transporting into the main pipe (30) a lateral pipe lining material (1) made of a flexible tubular resin-absorbing material (2) impregnated with a curing resin and having at one end a flange (3, 11) formed which is made of a material capable of being welded to the thermoplastic resin of the resin pipe (20a) of the main pipe lining material (20) or of the plastic film (90b) of the tubular resin-absorbing material (90b) thereof;
bringing the flange (3, 11) of the lateral pipe lining material (1) into close contact with a periphery of the lateral pipe opening of the main pipe (30) that is lined by the main pipe lining material (20, 90); and
heating and welding the thermoplastic resin of the flange (3, 11) of the lateral pipe lining material (1) and the thermoplastic resin of the resin pipe (20a) or of the plastic film (90b) of the main pipe lining material (20, 90) to integrally join the flange (3, 11) of the lateral pipe lining material (1) with the main pipe lining material (20, 90).

2. A lateral pipe lining method according to claim 1, wherein the thermoplastic resin of the resin pipe (20a) or the plastic film (90b) includes polyethylene, and the flange (3, 11) of the lateral pipe lining material (1) is made of polyethylene.

3. A lateral pipe lining method according to claim 1, wherein the thermoplastic resin of the resin pipe (20a) or the plastic film (90b) includes polypropylene, and the flange (3, 11) of the lateral pipe lining material (1) is made of polypropylene.

4. A lateral pipe lining method according to any of claims 1 to 3, wherein the thermoplastic resins are heated for plastic welding before the lateral pipe lining material (1) is inserted into the lateral pipe (31), or when it is being inserted into the lateral pipe (31), or when a resin in the tubular resin-absorbing material (2) of the lateral pipe lining material (1) is cured after it has been inserted into the lateral pipe (31).

5. A lateral pipe lining apparatus in which a lateral pipe lining material (1) for lining a lateral pipe (31) is inserted into the lateral pipe from a lateral pipe opening of a main pipe (30), which is lined using a main pipe lining material (20) composed of a resin pipe (20a) made of thermoplastic resin, or using a main pipe lining material (90) composed of a tubular resin-absorbing material (90a) covered with a plastic film (90b) of thermoplastic resin, comprising:
a head collar (80) having a curving section;
heating means (81) attached to the curving section of the head collar (80);
a lateral pipe lining material (1) that includes a flexible tubular resin-absorbing material (2) impregnated with a curing resin and having at one end a flange (3, 11) formed of a material capable of being welded to the thermoplastic resin of the resin pipe (20a) or of the plastic film (90b) of the main pipe lining material (20, 90), the lateral pipe lining material (1) being seated onto the head collar (80) so that the flange (3, 11) is heated by the heating means (81);
a pressure bag (43) that is attached air tightly to the head collar (80) and houses the lateral pipe lining material (1) therein; and
a work robot (42) for guiding the pressure bag (43) so that the flange of the lateral pipe lining material (1) comes into close contact with the lateral pipe opening periphery of the main pipe (30) lined by the main pipe lining material (20, 90);
wherein
the thermoplastic resin of the flange of the lateral pipe lining material (1) and the thermoplastic resin of the resin pipe or of the plastic film of the main pipe lining material (20, 90) are heated for plastic welding to integrally join the flange of the lateral pipe lining material (1) with the main pipe lining material (20, 90).

6. A lateral pipe lining apparatus according to claim 5, wherein the thermoplastic resin of the resin pipe (20a) or the plastic film (90b) includes polyethylene, and the flange (3, 11) of the lateral pipe lining material (1) is made of polyethylene.

7. A lateral pipe lining apparatus according to claim 5, wherein the thermoplastic resin of the resin pipe (20a) or the plastic film (90b) includes polypropylene, and the flange (3, 11) of the lateral pipe lining material (1) is made of polypropylene.

8. A lateral pipe lining apparatus according to any of claims 5 to 7, wherein the thermoplastic resins are heated for plastic welding before the lateral pipe lining material (1) is inserted into the lateral pipe (31), or when it is being inserted into the lateral pipe (31), or when a resin in the tubular resin-absorbing material (2) of the lateral pipe lining material (1) is cured after it has been inserted into the lateral pipe (31).
